# DEMANDE DE BREVET EUROPEEN

(11) **EP 2 833 362 A1**
(43) Date de publication de la demande: **04.02.2015**
(21) Numéro de dépôt: 14178688.9
(22) Date de dépôt: 28.07.2014
(51) Int. Cl.: G11B 27/034, G11B 27/10, G06F 17/30

(54) **Génération de listes de reproduction de contenus personnalisées**

(30) Priorité: 29.07.2013 FR 1357471
(71) Demandeur: Orange, 75015 Paris (FR)
(72) Inventeur: Roulliere, Stephane, 35000 RENNES (FR); Heau, Tristan, 61210 BAZOCHES AU HOULME (FR); Doisy, Nicolas, 35000 RENNES (FR)

(57) **Abrégé**

L'invention concerne la génération automatique de listes de reproduction de contenus, aussi nommées playlists en anglais.

Un objet de l'invention est un procédé de génération de listes de reproduction de contenus personnalisées relativement au vécu d'un évènement par un utilisateur d'un terminal de communication, ledit procédé de générations listes de reproduction comportant une détermination d'au moins deux éléments distincts en fonction de données fournies par ledit terminal de communication dudit utilisateur et de données relatives audit évènement mises à disposition par un dispositif de fourniture de services concernant ledit évènement, chacun desdits éléments permettant de déterminer au moins un contenu mis à disposition par au moins un dispositif de fourniture de contenus, lesdits contenus ainsi déterminés pour chaque élément étant intégrés dans une liste de reproduction.

Ainsi, la liste de reproduction est non seulement généré automatiquement mais en plus elle est associée à un évènement et personnalisée en fonction du vécu de cet évènement par un utilisateur.

## Description

L'invention concerne la génération automatique de listes de reproduction de contenus, aussi nommées playlists en anglais.

Aujourd'hui, les fournisseurs de contenus, notamment de contenus audio, permettent à leur utilisateur de créer des listes de reproduction de manière manuelle. Ainsi, l'utilisateur pourra écouter ou faire écouter (notamment par partage de sa liste de reproduction) ultérieurement des contenus qu'il aura sélectionné dans l'ordre qu'il aura indiqué ou dans un autre ordre (aléatoire, trier par nom d'artiste, genre, nom de morceaux, albums, etc.). Les utilisateurs de ces services de fourniture de contenus peuvent aussi accéder à des listes de reproduction mises à disposition ou partagées par le service de fourniture de contenus ou d'autres utilisateurs du service de fourniture (particulier mais aussi professionnel tel que des radios, émissions de télévision, etc.).

D'un autre côté, l'offre évènementielle s'élargissant, les gens assistent à de plus en plus d'évènements artistiques : festival de musique, théâtre, cinéma... Or, les participant à de tels évènement disposeront pour revivre de tels événements soit de contenus complets tels que un DVD du festival ou son équivalent en vidéo à la demande, soit le participant devra rechercher les références des oeuvres ou artistes a posteriori pour rechercher et éventuellement consommer des contenus relatifs à ceux-ci.

Un des buts de la présente invention est de remédier à des insuffisances de l'état de la technique.

Un objet de l'invention est un procédé de génération de listes de reproduction de contenus personnalisées relativement au vécu d'un évènement par un utilisateur d'un terminal de communication, ledit procédé de générations listes de reproduction comportant une détermination d'au moins deux éléments distincts en fonction de données fournies par ledit terminal de communication dudit utilisateur et de données relatives audit évènement mises à disposition par un dispositif de fourniture de services concernant ledit évènement, chacun desdits éléments permettant de déterminer au moins un contenu mis à disposition par au moins un dispositif de fourniture de contenus, lesdits contenus ainsi déterminés pour chaque élément étant intégrés dans une liste de reproduction.

Ainsi, la liste de reproduction est non seulement généré automatiquement mais en plus elle est associée à un évènement et personnalisée en fonction du vécu de cet évènement par un utilisateur.

Avantageusement, le procédé de génération de listes de reproduction comporte une intégration dans ladite liste de reproduction personnalisée relative au vécu d'un évènement par un utilisateur d'au moins un contenu mis à disposition par un dispositif de fourniture de contenus, ledit au moins un contenu étant déterminé en fonction dudit élément.

Ainsi, les contenus sont chargés automatiquement dans la liste de reproduction sans action particulière de l'utilisateur.

Avantageusement, le procédé de génération de listes de reproduction comporte une récupération de données de géolocalisation constituant au moins une donnée fournie par ledit terminal de communication dudit utilisateur.

Ainsi, le vécu de l'évènement est déterminé en fonction des déplacements de l'utilisateur lors de cet évènement.

Avantageusement, le procédé de génération de listes de reproduction comporte une récupération de données multimédia capturées par ledit terminal de communication constituant au moins une donnée fournie par ledit terminal de communication dudit utilisateur.

Ainsi, le vécu de l'évènement est déterminé est fonction de données capturées (audio et/ou vidéo) lors de l'évènement par le terminal de communication de l'utilisateur, que les données capturées soient enregistrées ou non localement ou à distance dans le réseau.

Avantageusement, le procédé de génération de listes de reproduction comporte un déclenchement de ladite détermination d'un élément sur action dudit utilisateur sur ledit terminal de communication.

Ainsi, un élément permettant de déterminer au moins un contenus de la liste de reproduction relative à l'événement n'est déterminé que si l'utilisateur fait une action relative à l'évènement, notamment indication de favoris ou « lie» en anglais à un dispositif de fourniture de services relatif à l'évènement tel que sur la page d'un réseau social relatif à l'évènement.

Avantageusement, les données de relatives audit évènement mises à disposition par un dispositif de fourniture de services concernant ledit évènement sont des données générées en temps réel par ledit dispositif de fourniture de services en fonction d'une reconnaissance de données multimédia capturées reçues par ledit dispositif de fourniture de services.

Ainsi, la détermination de l'élément sera faite à partir de données relatives à l'évènement plus précises et tenant compte d'un éventuel changement de programmation de dernière minute. Des données multimédia capturées telles qu'un photo d'un artiste seul ne correspondant pas à l'artiste originellement programmé sur cet scène, permet de fournir le nom de l'artiste réellement en scène dans les données de relatives à l'évènement pour déterminer un élément permettant d'intégrer dans la liste de reproduction personnalisée des morceaux de cet artiste dont l'utilisateur à assister au concert et non de l'artiste originellement programmé sur cet scène mais que l'utilisateur n'a pas vu.

L'invention vise donc aussi un programme comprenant des instructions de code de programme pour l'exécution des étapes du procédé de génération de listes de reproduction lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un générateur de listes de reproduction et étant conçus pour commander l'exécution des différentes étapes de ce procédé.

Un autre objet de l'invention est un générateur de listes de reproduction de contenus personnalisées relativement au vécu d'un évènement par un utilisateur d'un terminal de communication, ledit générateur de listes de reproduction comportant un analyseur apte à déterminer au moins deux éléments distincts en fonction de données fournies par ledit terminal de communication dudit utilisateur et de données relatives audit évènement mises à disposition par un dispositif de fourniture de services concernant ledit évènement, chacun desdits éléments permettant de déterminer au moins un contenu mis à disposition par au moins un dispositif de fourniture de contenus, lesdits contenus ainsi déterminés pour chaque élément étant intégrés dans une liste de reproduction.

Un objet de l'invention est également un dispositif de fourniture de contenus comportant une base de données de contenus et un générateur de listes de reproduction de contenus, ledit générateur de listes de reproduction comportant un analyseur apte à déterminer au moins deux éléments distincts en fonction de données fournies par un terminal de communication d'un utilisateur et de données relatives à un évènement vécu par ledit utilisateur mises à disposition par un dispositif de fourniture de services concernant ledit évènement, chacun desdits éléments permettant de déterminer au moins un contenu mis à disposition par ledit dispositif de fourniture de contenus, lesdits contenus ainsi déterminés pour chaque élément étant intégrés dans une liste de reproduction.

Un objet de l'invention est encore un dispositif de fourniture de services relatif à un évènement mettant à disposition d'un générateur de listes de reproduction de contenus personnalisées relativement au vécu d'un évènement par un utilisateur d'un terminal de communication, des données relatives audit évènement, en fonction desquels et de données fournies par ledit terminal dudit utilisateur, le générateur de listes de reproduction détermine un élément permettant de déterminer au moins un contenu mis à disposition par au moins un dispositif de fourniture de contenus.

Avantageusement, le dispositif de fourniture de services comporte un générateur temps réel de données relatives audit évènement en fonction de données multimédia capturées reçues par le dispositif de fourniture de services.

Ainsi, la détermination de l'élément sera faite à partir de données relatives à l'évènement plus précises et tenant compte d'un éventuel changement de programmation de dernière minute. Des données multimédia capturées telles qu'un photo d'un artiste seul ne correspondant pas à l'artiste originellement programmé sur cet scène, permet de fournir le nom de l'artiste réellement en scène dans les données de relatives à l'évènement pour déterminer un élément permettant d'intégrer dans la liste de reproduction personnalisée des morceaux de cet artiste dont l'utilisateur à assister au concert et non de l'artiste originellement programmé sur cet scène mais que l'utilisateur n'a pas vu.

Un objet de l'invention est également un procédé d'interface utilisateur avec un générateur de listes de reproduction de contenus personnalisées relativement au vécu d'un évènement par un utilisateur d'un terminal de communication, ledit procédé d'interface utilisateur avec un générateur de listes de reproduction comportant une transmission de données par ledit terminal de communication dudit utilisateur à un générateur de listes de reproduction, lesdites données transmises permettant de déterminer un élément en fonction desdites données transmises par ledit terminal de communication dudit utilisateur et de données relatives audit évènement mises à disposition par un dispositif de fourniture de services concernant ledit évènement, ledit élément permettant de déterminer au moins un contenu mis à disposition par au moins un dispositif de fourniture de contenus.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif faisant partie d'un terminal de communication et étant conçus pour commander l'exécution des différentes étapes de ce procédé.

L'invention vise donc aussi un programme comprenant des instructions de code de programme pour l'exécution des étapes du procédé d'interface utilisateur avec un générateur de listes de reproduction lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Un objet de l'invention est encore une interface utilisateur avec un générateur de listes de reproduction de contenus personnalisées relativement au vécu d'un évènement par un utilisateur d'un terminal de communication, ladite interface utilisateur avec un générateur de listes de reproduction comportant un déclencheur de transmission de données par ledit terminal de communication dudit utilisateur à un générateur de listes de reproduction, lesdites données transmises permettant de déterminer un élément en fonction desdites données transmises par ledit terminal de communication dudit utilisateur et de données relatives audit évènement mises à disposition par un dispositif de fourniture de services concernant ledit évènement, ledit élément permettant de déterminer au moins un contenu mis à disposition par au moins un dispositif de fourniture de contenus.

Avantageusement, l'interface utilisateur avec un générateur de listes de reproduction comportant au moins un accès à au moins une liste de reproduction de contenus personnalisée relativement au vécu dudit évènement par ledit utilisateur.

Un objet de l'invention est aussi un terminal de communication d'un utilisateur comportant au moins une interface utilisateur avec un générateur de listes de reproduction de contenus personnalisées relativement au vécu d'un évènement par un utilisateur d'un terminal de communication, ladite interface utilisateur avec un générateur de listes de reproduction comportant un déclencheur de transmission de données par ledit terminal de communication dudit utilisateur à un générateur de listes de reproduction, lesdites données transmises permettant de déterminer un élément en fonction desdites données transmises par ledit terminal de communication dudit utilisateur et de données relatives audit évènement mises à disposition par un dispositif de fourniture de services concernant ledit évènement, ledit élément permettant de déterminer au moins un contenu mis à disposition par au moins un dispositif de fourniture de contenus.

Les caractéristiques et avantages de l'invention apparaîtront plus clairement à la lecture de la description, faite à titre d'exemple, et des figures s'y rapportant qui représentent :
- Figure 1, un schéma simplifié des procédés de génération de listes de reproduction et d'interface utilisateur selon l'invention,
- Figure 2, un schéma simplifié d'un exemple d'architecture comportant un générateur de listes de reproduction et une interface utilisateur avec ledit générateur de listes de reproduction selon l'invention,
- Figures 3a et 3b, deux schémas simplifiés de deux exemples de variantes de mise en oeuvre de l'invention,

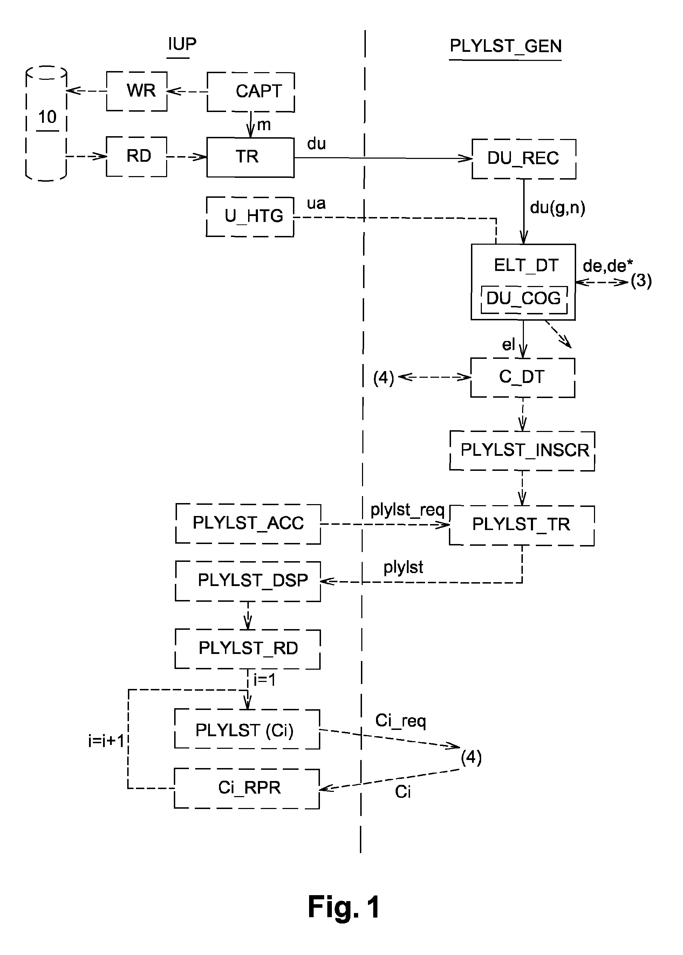

La figure 1 illustre un schéma simplifié des procédés de génération de listes de reproduction et d'interface utilisateur selon l'invention.

Le procédé de génération PLYLST_GEN de listes de reproduction de contenus personnalisées relativement au vécu d'un évènement par un utilisateur d'un terminal de communication, comporte une détermination ELT_DT d'un élément *el* en fonction de données du fournies par ledit terminal de communication dudit utilisateur et de données relatives audit évènement de mises à disposition par un dispositif de fourniture de services 3 concernant ledit évènement. L'élément *el* permet de déterminer au moins un contenu c mis à disposition par au moins un dispositif de fourniture de contenus 4.

En particulier, les données du sont fournies par un procédé d'interface utilisateur IUP mis en oeuvre par le terminal de communication de l'utilisateur.

En particulier, le procédé de génération de listes de reproduction PLYLST_GEN comporte une intégration PLYLST_INSCR dans ladite liste de reproduction personnalisée relative au vécu d'un évènement par un utilisateur d'au moins un contenu mis à disposition par un dispositif de fourniture de contenus 4. Ce contenu c est déterminé C_DT en fonction dudit élément *el.*

En particulier, le procédé de génération de listes de reproduction PLYLST_GEN comporte une récupération DU_REC de données de géolocalisation *g* constituant au moins une donnée du fournie par ledit terminal de communication dudit utilisateur.

En particulier, le procédé de génération de listes de reproduction PLYLST_GEN comporte une récupération DU_REC de données multimédia m capturées par ledit terminal de communication constituant au moins une donnée du fournie par ledit terminal de communication dudit utilisateur.

En particulier, la détermination d'un élément ELT_DT comporte soit une reconnaissance soit une commande d'une reconnaissance DU_COG des données multimédia capturées *m* en fonction des données *de* relatives à l'évènement et éventuellement d'autres données du transmises par le terminal de communication telles que la localisation et/ou l'instant de capture... Ainsi, la reconnaissance sur des données audio et/ou vidéo et/ou d'image permettra de reconnaître au moins l'un des éléments suivants : le ou les artistes interprètes, le nom du compositeur et/ou de l'auteur, le nom de l'ouvrage (album, livre, pièces, peintures, sculptures, monuments, etc.) et/ou la section de l'ouvrage (morceau, chapitre, acte/scène, salle, etc.).

Cette reconnaissance DU_COG sera simplifiée par la connaissance des données de relatives à l'évènement et éventuellement d'autres données du transmises par le terminal de communication. En effet, ces données limiteront la recherche aux artistes programmés à l'évènement, éventuellement aux oeuvres programmées et/ou à la liste des oeuvres les plus écoutés/vus de ces artistes programmés à l'évènement (festival de musique, danse, théâtre, expositions, etc.).

En particulier, le procédé de génération de listes de reproduction comporte un déclenchement de ladite détermination ELT_DT d'un élément sur action *ua* dudit utilisateur sur ledit terminal de communication.

En particulier, les données de relatives à l'évènement comportent des données stockées dans un dispositif de fourniture de services 3 relatif à l'évènement. Eventuellement, les données de relatives à l'évènement comportent des données générées en temps réel par un dispositif de fourniture de services 3 relatif à l'évènement.

En particulier, un procédé de génération temps réel de données relatives à l'évènement notamment mis en oeuvre par le dispositif de fourniture de services 3 relatif à l'évènement comporte une transmission de données temps réel relatives à l'évènement permettant une détermination d'au moins deux éléments distincts par un procédé de génération de listes de reproduction, les données temps réel transmises étant fonction d'une reconnaissance de données multimédia capturées reçues.

En particulier, le procédé de génération de listes de reproduction comporte une détermination C_DT d'un ou plusieurs contenus en fonction de chacun des éléments déterminés *el.* La détermination C_DT d'un ou plusieurs contenus est effectuée en fonction de contenus mis à disposition par un ou plusieurs dispositifs de fourniture de contenus 4.

En particulier, le procédé de génération de listes de reproduction comporte l'intégration PLYLST_INSCR d'au moins un contenu déterminé en fonction de l'élément el dans la liste de reproduction personnalisée relative à l'évènement. L'intégration d'un contenu PLYLST_INSCR consiste notamment en l'intégration soit d'un lien vers ledit contenu dans un dispositif de fourniture de contenus 3, soit d'éléments *el** permettant de retrouver ledit contenu dans un dispositif de fourniture de contenus 3 (ces éléments *el** sont notamment contenus dans les métadonnées du contenu c déterminé en fonction de l'élément *el*).

En particulier, le procédé de génération de listes de reproduction comporte une transmission de la liste de reproduction générée PLYLST_TR à un terminal de communication d'un utilisateur, notamment sur requête *plylst_req* de la liste de reproduction par ledit terminal de communication.

Un mode de réalisation du procédé de génération de listes de reproduction est un programme comprenant des instructions de code de programme pour l'exécution des étapes du procédé de génération de listes de reproduction lorsque ledit programme est exécuté par un processeur.

Le procédé d'interface utilisateur IUP avec un générateur de listes de reproduction de contenus personnalisées relativement au vécu d'un évènement par un utilisateur d'un terminal de communication, comporte une transmission TR de données *du* par ledit terminal de communication dudit utilisateur à un générateur de listes de reproduction. Les données *du* transmises permettent de déterminer un élément *el* en fonction desdites données transmises par ledit terminal de communication dudit utilisateur et de données de relatives audit évènement mises à disposition par un dispositif de fourniture de services 3 concernant ledit évènement. L'élément el permet de déterminer au moins un contenu c mis à disposition par au moins un dispositif de fourniture de contenus 4.

Un mode de réalisation du procédé d'interface utilisateur est un programme comprenant des instructions de code de programme pour l'exécution des étapes du procédé d'interface utilisateur avec un générateur de listes de reproduction lorsque ledit programme est exécuté par un processeur.

En particulier, le procédé d'interface utilisateur IUP comporte une capture CAPT, notamment une capture audio et/ou vidéo. Les données capturées m peuvent être directement transmises TR. Les données capturées *m* sont éventuellement enregistrées WR dans des moyens de stockage 10 du terminal de communication de l'utilisateur. Le procédé d'interface utilisateur IUP comporte éventuellement cet enregistrement WR des données capturées m.

De manière alternative à la transmission directe des données capturées *m,* le procédé d'interface utilisateur IUP transmet TR les données capturées enregistrées *m* soit immédiatement après leur enregistrement WR, soit ultérieurement lors, par exemple, d'une demande de création de listes de reproduction par l'utilisateur. Le procédé d'interface utilisateur comporte alors notamment une lecture RD des données capturées *m,* lors de l'évènement pour lequel une liste de reproduction est en cours de génération, et enregistrées WR. La lecture est en particulier faite dans les moyens de stockage 10.

En particulier, le procédé d'interface utilisateur IUP transmet TR conjointement et/ou indépendamment des données capturées m d'autres données concernant l'utilisateur durant l'évènement, notamment l'instant de capture t des données capturées m et/ou la localisation g du terminal de communication lors de la capture CAPT des données capturées m, etc.

En particulier, le procédé d'interface utilisateur comporte une commande utilisateur U_HGT permettant à l'utilisateur du terminal de communication d'agir relativement à l'évènement en cours. La commande utilisateur U_HGT est notamment une commande de mise en favoris ou « like » en anglais relative à l'évènement comportant par exemple l'instant et la localisation du terminal de communication lors de la commande de mise en favoris.

L'action de l'utilisateur *ua* est transmise au procédé de génération de listes de reproduction PLYLST_GEN : l'action ua est alors, notamment, à l'origine d'un déclenchement de la détermination d'au moins deux éléments distincts ELT_DT. Ainsi, l'invention permettra d'ajouter à la liste de reproduction que des contenus relatifs aux instants de l'évènement vécu par l'utilisateur que l'utilisateur a indiqué apprécier.

De manière alternative, l'invention permettra d'ajouter à la liste de reproduction plus de contenus relatifs aux instants de l'évènement vécu par l'utilisateur que l'utilisateur a indiqué apprécier que de contenus relatifs aux instants de l'évènement vécu par l'utilisateur pour lesquels l'utilisateur n'a rien indiqué. La commande utilisateur U_HGT fournit une action *ua* permettant non seulement de déclencher la détermination d'élément ELT_DT mais éventuellement de contrôler la génération de listes de reproduction PLYLST_GEN, notamment la détermination de contenu C_DT, afin de déterminer un nombre de contenus tagués prédéterminé relatifs à l'élément el dont la détermination EL_DT a été commandée U_HGT par l'utilisateur au lieu du nombre de contenus par défaut.

Dans le cas d'un festival de musique, au lieu de déterminer seulement un morceau (si 1 est le nombre de contenus par défaut) relatif à un artiste écouté par l'utilisateur lors du festival pour l'inclure dans la liste de reproduction personnalisée relative au festival de musique, l'indication de favoris par l'utilisateur déclenchera la détermination de cinq morceaux (si 5 est le nombre de contenus tagués prédéterminé) relatifs à l'artiste écouté par l'utilisateur lors de la commande utilisateur U_HGT qui seront inclus dans la liste de reproduction personnalisée relative au festival de musique.

Par exemple, le nombre de morceau d'un artiste peut être fonction du temps passé par l'utilisateur du terminal de communication dans une localisation donné par rapport à la durée du concert de cet artiste.

Eventuellement, la commande utilisateur U_HGT fournit une action *ua* permettant non seulement de déclencher la détermination d'élément ELT_DT mais éventuellement de la contrôler afin d'obtenir un élément plus précis.

Dans le cas d'un festival de musique, au lieu de rechercher seulement le nom de l'artiste pour établir la liste de reproduction, l'indication de favoris par l'utilisateur déclenchera la recherche du morceaux programmer à l'instant de la commande utilisateur pour joindre à la liste de reproduction le morceau que l'utilisateur écoutait lors de sa commande utilisateur U_HGT au lieu de morceaux de la top liste de l'artiste (par exemple, les 10 morceaux les plus écoutés).

En outre, l'indication de favoris par l'utilisateur pourra déclencher la recherche du morceaux programmé à l'instant de la commande utilisateur pour joindre à la liste de reproduction le morceau que l'utilisateur écoutait lors de sa commande utilisateur U_HGT en plus d'un ou plusieurs morceaux de la top liste de l'artiste (par exemple, les 10 morceaux les plus écoutés).

En particulier, le procédé d'interface utilisateur IUP comporte un accès PLYLST_ACC à la liste de reproduction personnalisée relative à un évènement. Cet accès PLYLST_ACC permet à l'utilisateur de demander la liste de reproduction *plylst_req* à partir du terminal de communication permettant la génération de listes de reproduction lors de l'évènement ou d'un autre terminal de communication permettant l'accès soit au générateur de listes de reproduction, soit à un dispositif de fourniture de services relatif à l'évènement, soit à un dispositif de fourniture de contenus 4 mettant à disposition la liste de reproduction à destination de l'utilisateur pour lequel la liste de reproduction a été personnalisée(aussi nommée utilisateur source), et éventuellement d'un ou plusieurs autres utilisateurs destinataires avec lesquels l'utilisateur source (pour lequel la liste de reproduction a été personnalisée) a partagé sa liste de reproduction.

En particulier, le procédé d'interface utilisateur IUP comporte une reproduction PLYLST_DSP de la liste de reproduction personnalisée relative à un évènement *plylst.* La liste de reproduction *plylst* est transmise PLYLST_TR soit en cours de génération, soit ultérieurement sur réception d'une demande d'accès *plylst_req.* La liste de reproduction *plylst* est transmise PLYLST_TR par soit le générateur de listes de reproduction, soit un dispositif de fourniture de services relatif à l'évènement, soit un dispositif de fourniture de contenus 4 mettant à disposition la liste de reproduction à destination de l'utilisateur pour lequel la liste de reproduction a été personnalisée (aussi nommée utilisateur source), et éventuellement d'un ou plusieurs autres utilisateurs destinataires avec lesquels l'utilisateur source (pour lequel la liste de reproduction a été personnalisée) a partagé sa liste de reproduction.

En particulier, le procédé d'interface utilisateur IUP comporte une lecture de la liste de reproduction PLYLST_RD qui comporte notamment une reproduction Ci_RPR dans l'ordre de la liste de reproduction (comme illustré par la figure 1 : i=1, i+1) ou dans un ordre donné par l'utilisateur (tri sur le nom de l'artiste, tri par album, etc.) ou dans un ordre aléatoire d'un ou d'une partie ou de l'ensemble des contenus indiqués dans la liste de reproduction. Cette reproduction d'un contenu Ci_RPR est notamment faite à réception du contenu Ci fourni par un dispositif de fourniture de contenu 4 notamment sur requête Ci_req par une commande de lecture de contenus PLYLST_(Ci) déclenchée par la lecture de la liste de reproduction PLYLST_RD.

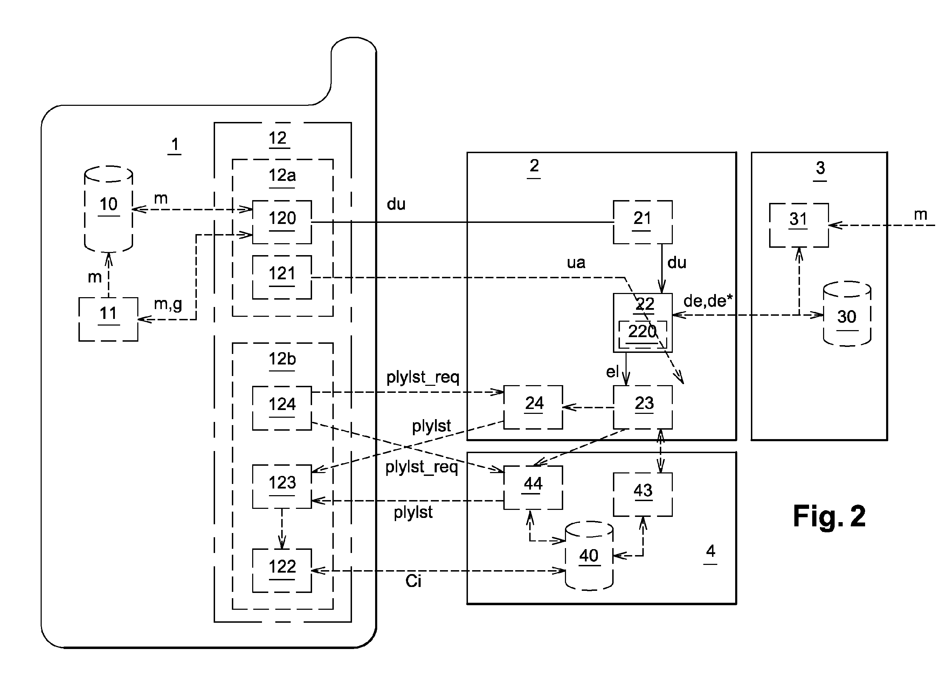

La figure 2 illustre un schéma simplifié d'un exemple d'architecture comportant un générateur de listes de reproduction et une interface utilisateur avec ledit générateur de listes de reproduction selon l'invention.

Un générateur 2 de listes de reproduction de contenus personnalisées relativement au vécu d'un évènement par un utilisateur d'un terminal de communication 1, comporte un analyseur 22 apte à déterminer au moins deux éléments *el* distincts en fonction de données fournies du par ledit terminal de communication 1 dudit utilisateur et de données de relatives audit évènement mises à disposition par un dispositif de fourniture de services 3 concernant ledit évènement. Chacun desdits éléments *el* permet de déterminer au moins un contenu c mis à disposition par au moins un dispositif de fourniture de contenus 4, lesdits contenus ainsi déterminés pour chaque élément étant intégrés dans une liste de reproduction.

L'analyseur 22 est notamment un moteur d'analyse contextuelle permettant de déterminer et mémoriser en temps réel quel est le programme auquel assiste l'utilisateur, au fil de l'évènement et de ses pérégrinations sur le lieu de l'évènement. Ce moteur 22 prend en entrée par exemple la géolocalisation de l'utilisateur en temps réel, via notamment un sondage (ou pooling en anglais) régulier du terminal de communication 1 de l'utilisateur par le générateur 2. Ce moteur 22 compare notamment les données du provenant du terminal de communication 1 à la programmation géolocalisée *de* en base, c'est-à-dire fournie par une base de données de programmes d'un dispositif de fourniture de services 3 relatif à l'évènement.

En particulier, le générateur 2 de listes de reproduction comporte un récepteur 21 des données *du* transmises par le terminal de communication 1.

En particulier, le générateur 2 de listes de reproduction comporte un intégrateur 24 dans une liste de reproduction d'au moins un contenu en fonction d'un élément *el* déterminé par ledit générateur 2 de listes de reproduction.

Eventuellement, le générateur 2 peut déclencher la reproduction par le terminal de communication 1 de l'élément *el* ou du contenu c déterminé en fonction de l'élément *el* (notamment le nom du programme). Ainsi, l'intégrateur 24 peut être commandé par le terminal de communication 1 (non illustré) pour intégrer dans la liste le contenu *c* affiché pour mémoriser manuellement dans la liste de reproduction le nom du programme. Alternativement, l'intégrateur 24 ajoute automatiquement le contenu *c* déterminé dans la liste de reproduction.

En particulier, le générateur 2 de listes de reproduction comporte un moteur de recherche de contenus 23 apte à déterminer parmi les contenus mis à disposition par au moins un dispositif de fourniture de contenus 4 au moins un contenu en fonction d'un élément *el* déterminé par ledit générateur 2 de listes de reproduction.

Une interface utilisateur 12,12a avec un générateur 2 de listes de reproduction de contenus personnalisées relativement au vécu d'un évènement par un utilisateur d'un terminal de communication, comporte un déclencheur 120 de transmission de données du par ledit terminal de communication 1 dudit utilisateur à un générateur 2 de listes de reproduction. Les données *du* transmises permettent de déterminer un élément *el* en fonction desdites données transmises du par ledit terminal de communication 1 dudit utilisateur et de données de relatives audit évènement mises à disposition par un dispositif de fourniture de services 3 concernant ledit évènement. L'élément *el* permet de déterminer au moins un contenu c mis à disposition par au moins un dispositif de fourniture de contenus 4.

En particulier, l'interface utilisateur 12 avec un générateur de listes de reproduction comporte au moins un accès 124 à au moins une liste de reproduction de contenus personnalisée relativement au vécu dudit évènement par ledit utilisateur.

En particulier, l'interface utilisateur 12,12a avec un générateur 2 de listes de reproduction comporte un dispositif de commande utilisateur 121. Le dispositif de commande utilisateur 121 émet sur action de l'utilisateur du terminal de communication 1 une action utilisateur *ua* permettant de déclencher l'analyseur 22 du générateur de listes de reproduction 2.

Le terminal de communication 1 d'un utilisateur comporte au moins l'interface utilisateur 12, 12a avec un générateur de listes de reproduction de contenus personnalisées relativement au vécu d'un évènement par un utilisateur d'un terminal de communication.

En particulier, le terminal de communication 1 comporte des capteurs 11, notamment un micro et/ou une caméra, qui fournissent des données capturées m audio et/ou vidéo soit directement à l'émetteur (non illustré) du terminal de communication soit indirectement via le déclencheur 120 soit après enregistrement dans une mémoire 10 du terminal de communication 1. Ces capteurs 11 sont notamment commandés par le déclencheur 120. Les données multimédia *m* capturées constitue alors au moins une partie des données du transmises par le terminal de communication 1 au générateur de listes de reproduction 2.

Les capteurs 11 sont éventuellement un dispositif de localisation, par exemple de localisation de type GPS, permettant de fournir des données de localisation g qui constitue au moins une partie des données du transmises par le terminal de communication 1 au générateur de listes de reproduction 2.

En particulier, l'interface utilisateur 12 avec un générateur 2 de listes de reproduction comporte une interface de consultation 12b.

Notamment, l'interface de consultation 12b ou directement l'interface utilisateur 12 avec un générateur de listes de reproduction comporte un moteur 124 permettant de demander l'accès à une liste de reproduction soit directement d'un générateur de liste de reproduction 2, soit d'un dispositif de fourniture de contenu 4.

En particulier, l'interface de consultation 12b ou directement l'interface utilisateur 12 avec un générateur de listes de reproduction comporte un lecteur 123 de listes de reproduction recevant la liste de reproduction générée par le générateur 2 de listes de reproduction. La liste de reproduction est reçue du générateur 2 ou du dispositif de fourniture de contenu 4 ou du dispositif de fourniture de services liés à l'évènement 3, etc.

En particulier, l'interface de consultation 12b ou directement l'interface utilisateur 12 avec un générateur de listes de reproduction comporte un reproducteur 122 d'un ou plusieurs des contenus de listes de reproduction. Le reproducteur 122 requiert auprès d'un dispositif de fourniture de contenu 3 les contenus de la listes à reproduire (notamment sélectionnés par l'utilisateur dans la liste de reproduction) par exemple au moyen du lien ou d'autres éléments *el** indiqué pour le contenu *ci* dans la liste de reproduction. Le lien est notamment une adresse d'une mémoire ou d'une base de données de contenus 40 du dispositif de fourniture de contenu 4 à laquelle est stocké le contenu *ci.*

En particulier, le dispositif de fourniture de services 3 relatif à l'évènement comporte une mémoire 30 permettant de stocker le programme de l'évènement notamment sous la forme d'une base de données indiquant, par exemple, pour chaque artiste et/ou oeuvre, une instant de début, un instant de fin, et/ou une zone de localisation (par zone de localisation étant entendu une zone rectangulaire définie par au moins trois points donnés par des coordonnées GPS, ou une zone cellulaire définie par au moins un point donné par des coordonnées GPS et un rayon de taille donnée), etc.

En particulier, le dispositif de fourniture de services 3 relatif à l'évènement comporte un émetteur de données de relative à un évènement, notamment tout ou partie des données stockées dans une mémoire dudit dispositif de fourniture de services 3 relatif à l'évènement en fonction notamment de l'instant d'émission. Par exemple, seules les données de des oeuvres en cours (live en anglais) sont émises par le dispositif de fourniture de services 3. L'émetteur dispositif de fourniture de services 3 est, éventuellement, activé sur requête du générateur 2 de listes de reproduction qui fournit notamment la localisation du terminal de communication 1 afin de réduire les données de émises par le dispositif de fourniture de services 3 à celles correspondantes à cette localisation, voire à cette localisation à l'instant de où la localisation a été capturée ou déterminée.

En particulier, le dispositif de fourniture de services 3 relatif à l'évènement comporte un récepteur de données multimédia capturées *m* provenant d'au moins un capteur (non illustré sur la figure). Le capteur comporte notamment un microphone placé sur une scène d'un festival de musique, ou des moyens d'enregistrement connecté à une sortie audio et/ou vidéo et/ou d'image de la table de mixage d'une scène d'un festival de musique, etc. Les données multimédias capturées m sont transmises au dispositif de fourniture de services 3 relatif à l'évènement via un réseau de communication local ou distant filaire ou non. Le dispositif de fourniture de services 3 comporte un générateur temps réel de données relatives à l'évènement 31, tel que, soit un dispositif de reconnaissance en temps réel des données multimédia capturées reçues en fonction de données *de* relatives à l'évènement stockées dans le dispositif de fourniture de services 3, soit un requêteur apte à requérir une reconnaissance des données multimédia capturées reçues auprès d'un dispositif de reconnaissance et à recevoir les données résultantes de ce dispositif de reconnaissance, etc.

Ainsi, le dispositif de fourniture de services 3 peut fournir au générateur 2 de listes de reproduction non seulement des données de relatives à l'évènement stockées dans le dispositif de fourniture de services 3, mais aussi des données de* relatives à l'évènement générées en temps réel par le dispositif de fourniture de services 3 en fonction de données multimédia capturées m provenant d'un capteur connecté au dispositif de fourniture de services via un réseau de communication.

Par exemple, le dispositif de fourniture de services 3 relatif à un festival de musique comporte une base de données dans laquelle est enregistrée préalablement à l'évènement la programmation de celui-ci : tel que, pour chaque scène, l'artiste et la période temporelle de programmation (éventuellement les coordonnées de géolocalisation de la scène ou son adresse géographique...) Les tables de mixages de chaque scène renvoi en temps réel des données multimédias m au dispositif de fourniture de services 3, par exemple les données audio. Le dispositif de fourniture de services 3 reconnait grâce à un dispositif de reconnaissance du dispositif de fourniture de services 3 ou distants le nom de chaque morceau joué sur chacune des scènes en temps réel. Ainsi, les données de relative à l'évènement fournis par le dispositif de fourniture de services 3 comporteront non seulement des données de relatives à l'évènement préalablement stockées tel que les artistes jouant sur chacune des scènes à l'instant d'envoi des données de relatives à l'évènement, mais aussi des données temps réel *de** relatives à l'évènement tels que le nom de chaque morceau reconnu comme étant joué sur chacune de ces scènes à l'instant d'envoi des données *de** relatives à l'évènement.

Autre exemple, une donnée multimédia capturée tel qu'une photographie, permettra notamment de reconnaître un artiste invité sur la scène d'un artiste programmé pour intégrer dans la liste de reproduction, éventuellement, un morceau dans lequel les deux artistes chantent en duo.

De manière alternative à l'architecture de la figure (non illustré), le générateur 2 de listes de reproduction de contenu est intégré dans un dispositif de fourniture de services relatif à l'évènement 3.

En particulier, le dispositif de fourniture de contenus 4 comporte une base de données de contenus 40 à partir de laquelle sont déterminés les contenus intégrés dans la liste de reproduction générée par le générateur 2 de listes de reproduction. Notamment, un moteur de recherche de contenus 23 du générateur 2 de listes de reproduction et/ou 43 du dispositif de fourniture de contenus 4 détermine(nt) parmi les contenus mis à disposition dans la base de données de contenus 40 par le dispositif de fourniture de contenus 4 au moins un contenu en fonction d'un élément *el* déterminé par ledit générateur 2 de listes de reproduction.

En particulier, le dispositif de fourniture de contenus 4 comporte un intégrateur 44 dans une liste de reproduction recevant les éléments à intégrer du générateur 2 de listes de reproduction. Ledit intégrateur 44 peut fournir la liste de reproduction à une interface utilisateur 12, 12b d'un terminal de communication, en particulier sur requête de cette interface utilisateur 12, 12b.

Dans une alternative non illustrée, le dispositif de fourniture de contenus 4 comporte une base de données de contenus 40 et le générateur de listes de reproduction de contenus 2.

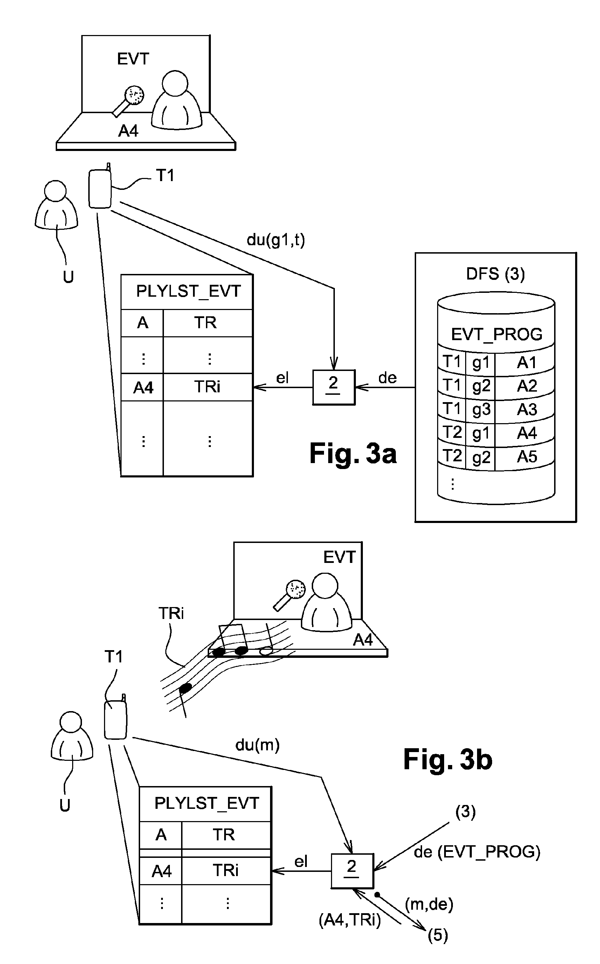

Les figures 3a et 3b illustrent deux schémas simplifiés de deux exemples de variantes de mise en oeuvre de l'invention.
La figure 3a illustre l'intégration d'un contenu dans une liste de reproduction en fonction de données de localisation.

L'utilisateur U porteur d'un terminal de communication T1 assiste lors d'un évènement EVT tel qu'un festival de musique à un concert d'un artiste A4. L'utilisateur U ayant souscrit à un service de génération de liste de reproduction personnalisée relative au vécu d'évènements, son terminal de communication T1 transmet des données *du* à un générateur 2 de listes de reproduction soit de manière automatique, soit sur requête du générateur 2 de listes de reproduction.

En particulier, le terminal de communication T1, notamment son interface utilisateur avec le générateur 2 de listes de reproduction, peut émettre durant la période de l'évènement des données du soit de manière périodique et/ou en fonction des déplacements de l'utilisateur et/ou sur action de l'utilisateur, soit sur requête du générateur 2.

L'utilisation de la connaissance des déplacements de l'utilisateur permet de réduire la périodicité lorsque l'utilisateur se déplace et de l'allonger lorsque l'utilisateur restée à la même localisation, permettant ainsi de réduire les données du transmises lorsque l'utilisateur U assiste au même concert du début à la fin, tout en permettant de déterminer qu'il assiste au concert suivant sur la même scène.

La limitation à l'émission sur action de l'utilisateur permet de réduire non seulement les données *du* au vécu de l'utilisateur ayant suscité un intérêt, mais aussi les contenus de la listes de reproduction.

La limitation à l'émission sur requête du générateur permet seulement de les données *du :* le générateur 2 ayant connaissance du programme de l'évènement grâce aux données de fournies par le dispositif de fourniture de services relatifs à l'évènement DFS (3), le générateur 2 peut requérir les données *du* de l'utilisateur à des instants prédéterminés autour des instants de début et/ou fin d'oeuvres lors de l'évènement.

Le programme de l'évènement EVT_PROG est notamment enregistré dans une base de données du dispositif de fourniture de services DFS (3) relatif à l'évènement. Par exemple, est enregistré que :
- à la période T1, dans la zone de localisation g1, joue l'artiste A1 ;
- à la période T1, dans la zone de localisation g2, joue l'artiste A2 ;
- à la période T1, dans la zone de localisation g3, joue l'artiste A3 ;
- à la période T2, dans la zone de localisation g1, joue l'artiste A4 ;
- à la période T2, dans la zone de localisation g2, joue l'artiste A5 ;
- à la période T2, dans la zone de localisation g3, joue l'artiste A6...

Ainsi, dans notre exemple, les données du indique que l'utilisateur U était présent à la localisation g2 à l'instant t. Le générateur 2 de listes de reproduction détermine que l'instant t est compris dans la période T2, et donc l'élément *el* déterminé par le générateur 2 de listes de reproduction en fonction des données *du* du terminal de communication T1 et des données relatives à l'évènement comporte l'artiste A4.

Ainsi, la liste de reproduction personnalisée relative à l'évènement PLYLST_EVT générée par le générateur 2 de liste de reproduction comporte un morceau TRi de l'artiste A4, par exemple un morceau indiqué dans le programme EVT_PROG fourni par le dispositif de fourniture de services DFS (3) relatif à l'évènement ou un morceau de la top liste de l'artiste (listes des N morceaux les plus écoutés de l'artiste).

La figure 3n illustre l'intégration d'un contenu dans une liste de reproduction en fonction de données multimédia capturées.

L'utilisateur U porteur d'un terminal de communication T1 assiste lors d'un évènement EVT tel qu'un festival de musique à un concert d'un artiste A4. L'utilisateur U, ayant souscrit à un service de génération de liste de reproduction personnalisée relative au vécu d'évènements, capte au moyen de son terminal de communication T1 le morceau joué par l'artiste A4 et le transmet sous forme de données *du,* comportant alors au moins les données multimédia capturées m, à un générateur 2 de listes de reproduction.

Le générateur 2 de listes de reproduction envoie à un dispositif de reconnaissance 5 (éventuellement intégré au générateur 2, non illustré sur la figure 3b) les données multimédia capturées m et éventuellement d'autres données fonctions des données relatives à l'évènement *de* et éventuellement d'autres données *du* reçues du terminal de communication T1. Ainsi, la reconnaissance est effectué sur un nombre de morceaux limité par ces données *de, du,* par exemple sur les morceaux des artistes programmés pour l'évènement, ou mieux sur les morceaux des artistes programmés sur la plage horaire de capture et/ou la localisation de la capture.

Le dispositif de reconnaissance transmet au moins un élément el en fonction des résultats de la reconnaissance tels que le nom de l'artiste A4, et le nom du morceau TRi.

Ainsi, la liste de reproduction personnalisée relative à l'évènement PLYLST_EVT générée par le générateur 2 de liste de reproduction comporte un morceau reconnu TRi de l'artiste A4.

L'invention peut, en outre, être appliqué à des salons, ainsi le déplacement du visiteur dans le salon permet de déterminer en fonction de données relatives à l'évènement (tel que la programmation et le lieu de démonstration, la position des stands de chaque exposant...) des contenus tels que des cartes de visites, vidéo de l'exposant et/ou de la démonstration, première page d'un site internet associé à l'exposant. Le visiteur peut ainsi revivre ensuite sa visite grâce à la liste de reproduction personnalisé en fonction de son vécu du salon : soit en lisant cette liste de reproduction qui montre, notamment, sous forme de diaporama les différents contenus la constituant, soit en accédant plus spécifiquement à un contenu de cette liste de reproduction.

Un autre application de l'invention est la création d'une liste de reproduction en fonction du vécu d'une visite d'une ville, d'un musée, d'une exposition... De la même manière que pour le salon, les contenus téléchargés peuvent être divers : texte, photos, vidéos... et la liste de reproduction proposée permet soit de faire défiler soit sous la forme de montage vidéo et/ou audio, sous la forme de diaporama, les différents contenus mis dans cette liste pour revivre cette visite, soit d'accéder directement à la reproduction d'un contenu de cette liste en particulier.

L'invention vise aussi un support. Le support d'informations peut être n'importe quelle entité ou dispositif capable de stocker au moins l'une des programmes selon l'invention. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en oeuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonction selon la description ci-dessous. Un composant matériel correspond à tout élément d'un ensemble matériel (ou hardware) apte à mettre en oeuvre une fonction ou un ensemble de fonctions.

## Revendications

1. Procédé de génération de listes de reproduction de contenus personnalisées relativement au vécu d'un évènement par un utilisateur d'un terminal de communication, ledit procédé de générations listes de reproduction comportant une détermination d'au moins deux éléments distincts en fonction de données fournies par ledit terminal de communication dudit utilisateur et de données relatives audit évènement mises à disposition par un dispositif de fourniture de services concernant ledit évènement, chacun desdits éléments permettant de déterminer au moins un contenu mis à disposition par au moins un dispositif de fourniture de contenus, lesdits contenus ainsi déterminés pour chaque élément étant intégrés dans une liste de reproduction.

2. Procédé de génération de listes de reproduction selon la revendication précédente, **caractérisé en ce que** le procédé de génération de listes de reproduction comporte une intégration dans ladite liste de reproduction personnalisée relative au vécu d'un évènement par un utilisateur d'au moins un contenu mis à disposition par un dispositif de fourniture de contenus, ledit au moins un contenu étant déterminé en fonction dudit élément.

3. Procédé de génération de listes de reproduction selon l'une quelconque des revendications précédentes, **caractérisé en ce que** ledit procédé de génération de listes de reproduction comporte une récupération de données de géolocalisation constituant au moins une donnée fournie par ledit terminal de communication dudit utilisateur.

4. Procédé de génération de listes de reproduction selon l'une quelconque des revendications précédentes, **caractérisé en ce que** ledit procédé de génération de listes de reproduction comporte une récupération de données multimédia capturées par ledit terminal de communication constituant au moins une donnée fournie par ledit terminal de communication dudit utilisateur.

5. Procédé de génération de listes de reproduction selon l'une quelconque des revendications précédentes, **caractérisé en ce que** ledit procédé de génération de listes de reproduction comporte un déclenchement de ladite détermination d'un élément sur action dudit utilisateur sur ledit terminal de communication.

6. Programme comprenant des instructions de code de programme pour l'exécution des étapes du procédé de génération de listes de reproduction selon l'une quelconque des revendications précédentes lorsque ledit programme est exécuté par un processeur.

7. Générateur de listes de reproduction de contenus personnalisées relativement au vécu d'un évènement par un utilisateur d'un terminal de communication, ledit générateur de listes de reproduction comportant un analyseur apte à déterminer au moins deux éléments distincts en fonction de données fournies par ledit terminal de communication dudit utilisateur et de données relatives audit évènement mises à disposition par un dispositif de fourniture de services concernant ledit évènement, chacun desdits éléments permettant de déterminer au moins un contenu mis à disposition par au moins un dispositif de fourniture de contenus, lesdits contenus ainsi déterminés pour chaque élément étant intégrés dans une liste de reproduction.

8. Dispositif de fourniture de contenus comportant une base de données de contenus et un générateur de listes de reproduction de contenus, ledit générateur de listes de reproduction comportant un analyseur apte à déterminer au moins deux éléments distincts en fonction de données fournies par un terminal de communication d'un utilisateur et de données relatives à un évènement vécu par ledit utilisateur mises à disposition par un dispositif de fourniture de services concernant ledit évènement, chacun desdits éléments permettant de déterminer au moins un contenu mis à disposition par ledit dispositif de fourniture de contenus, lesdits contenus ainsi déterminés pour chaque élément étant intégrés dans une liste de reproduction..

9. Dispositif de fourniture de services relatif à un évènement mettant à disposition d'un générateur de listes de reproduction de contenus personnalisées relativement au vécu d'un évènement par un utilisateur d'un terminal de communication, des données relatives audit évènement, en fonction desquels et de données fournies par ledit terminal dudit utilisateur, le générateur de listes de reproduction détermine un élément permettant de déterminer au moins un contenu mis à disposition par au moins un dispositif de fourniture de contenus.

10. Dispositif de fourniture de services selon la revendication précédentes **caractérisé en ce que** le dispositif de fourniture de services comporte un générateur temps réel de données relatives audit évènement en fonction de données multimédia capturées reçues par le dispositif de fourniture de services.

11. Procédé d'interface utilisateur avec un générateur de listes de reproduction de contenus personnalisées relativement au vécu d'un évènement par un utilisateur d'un terminal de communication, ledit procédé d'interface utilisateur avec un générateur de listes de reproduction comportant une transmission de données par ledit terminal de communication dudit utilisateur à un générateur de listes de reproduction, lesdites données transmises permettant de déterminer au moins deux éléments distincts en fonction desdites données transmises par ledit terminal de communication dudit utilisateur et de données relatives audit évènement mises à disposition par un dispositif de fourniture de services concernant ledit évènement, chacun desdits éléments permettant de déterminer au moins un contenu mis à disposition par au moins un dispositif de fourniture de contenus, lesdits contenus ainsi déterminés pour chaque élément étant intégrés dans une liste de reproduction..

12. Programme comprenant des instructions de code de programme pour l'exécution des étapes du procédé d'interface utilisateur avec un générateur de listes de reproduction selon la revendication précédente lorsque ledit programme est exécuté par un processeur.

13. Interface utilisateur avec un générateur de listes de reproduction de contenus personnalisées relativement au vécu d'un évènement par un utilisateur d'un terminal de communication, ladite interface utilisateur avec un générateur de listes de reproduction comportant un déclencheur de transmission de données par ledit terminal de communication dudit utilisateur à un générateur de listes de reproduction, lesdites données transmises permettant de déterminer au moins deux éléments distincts en fonction desdites données transmises par ledit terminal de communication dudit utilisateur et de données relatives audit évènement mises à disposition par un dispositif de fourniture de services concernant ledit évènement, chacun desdits éléments permettant de déterminer au moins un contenu mis à disposition par au moins un dispositif de fourniture de contenus, lesdits contenus ainsi déterminés pour chaque élément étant intégrés dans une liste de reproduction..

14. Interface utilisateur avec un générateur de listes de reproduction selon la revendication précédente, **caractérisé en ce que** ladite interface utilisateur avec un générateur de listes de reproduction comporte au moins un accès à au moins une liste de reproduction de contenus personnalisée relativement au vécu dudit évènement par ledit utilisateur.

15. Terminal de communication d'un utilisateur comportant au moins une interface utilisateur avec un générateur de listes de reproduction de contenus personnalisées relativement au vécu d'un évènement par un utilisateur d'un terminal de communication, ladite interface utilisateur avec un générateur de listes de reproduction comportant un déclencheur de transmission de données par ledit terminal de communication dudit utilisateur à un générateur de listes de reproduction, lesdites données transmises permettant de déterminer au moins deux éléments en fonction desdites données transmises par ledit terminal de communication dudit utilisateur et de données relatives audit évènement mises à disposition par un dispositif de fourniture de services concernant ledit évènement, chacun desdits éléments permettant de déterminer au moins un contenu mis à disposition par au moins un dispositif de fourniture de contenus, lesdits contenus ainsi déterminés pour chaque élément étant intégrés dans une liste de reproduction..
